# EUROPÄISCHE PATENTSCHRIFT

(11) **EP 2 661 549 B1**
(45) Veröffentlichungstag und Bekanntmachung des Hinweises auf die Patenterteilung: **10.05.2017**
(21) Anmeldenummer: 11808662.8
(22) Anmeldetag: 29.12.2011
(51) Int. Cl.: F02G 5/04, F01K 23/06, F01K 23/10, F01K 25/10, F01K 15/02, F02G 5/02, H02K 7/18

(54) **VORRICHTUNG ZUR ENERGIEERZEUGUNG**
DEVICE FOR GENERATING ENERGY
DISPOSITIF DE GÉNÉRATION D'ÉNERGIE

(30) Priorität: 05.01.2011 DE 202011001111 U
(43) Veröffentlichungstag der Anmeldung: 13.11.2013
(73) Patentinhaber: Duerr Cyplan Ltd., Berkshire RG7 8NN (GB)
(72) Erfinder: ECKERT, Frank, 07356 Bad Lobenstein (DE)
(74) Vertreter: Gauss, Nikolai
(86) Internationale Anmeldenummer: PCT/EP2011/074271
(87) Internationale Veröffentlichungsnummer: WO 2012/093067

(56) Entgegenhaltungen:
- EP-A1- 1 326 017
- EP-A2- 0 045 843
- WO-A1-2008/025688
- DE-A1-102010 044 889
- US-A- 4 394 582
- US-A- 4 785 622
- US-A1- 2004 088 993
- US-A1- 2010 126 178

## Beschreibung

Die Erfindung betrifft eine Vorrichtung zur Energieerzeugung mit einer Verbrennungsmaschine, die eine Welle mit einem Drehmoment beaufschlagt, wobei die Verbrennungsmaschine Abwärme erzeugt, und mit einer RC-Anlage (RC = Rankine Cycle = Rankine Prozess), der Abwärme aus der Verbrennungsmaschine zugeführt wird, um damit eine mit einem elektrischen Generator gekoppelte Turbine zu betreiben, der mit einem für das Einleiten eines Zusatzdrehmoments mit der Welle drehgekoppelten Elektromotor verbunden ist.

Eine derartige Vorrichtung ist aus der WO 2008/025688 A1 bekannt. Diese Vorrichtung ist für den Einsatz auf Schiffen bestimmt und enthält eine RC-Anlage für das Antreiben eines elektrischen Generators, der zu einen das Bordnetz speist und zum anderen elektrische Energie für das Betreiben eines Elektromotors bereitstellt, der die mit einer Brennkraftmaschine angetriebene Schiffsschrauben-Antriebswelle unterstützt. Die RC-Anlage der Vorrichtung zur Energieerzeugung wird hier mit der Abwärme der Brennkraftmaschine betrieben.

Die EP 0 045 843 A2 und die EP 1 326 017 A1 offenbaren Vorrichtungen zur Energieerzeugung mit einer RC-Anlage und mit einer Brennkraftmaschine für den Einsatz in Kraftfahrzeugen. Diese Vorrichtungen enthalten jeweils einen elektrischen Generator und einen mit dem Antriebsstrang der Brennkraftmaschine gekoppelten Elektromotor, der abhängig von dem Betriebszustand des Kraftfahrzeugs auch als ein elektrischer Generator betrieben werden kann.

Die US 2010/0126278 A1 offenbart eine Vorrichtung zum Erzeugen von elektrischer Energie, in der ein Flugzeugtriebwerk mit einer RC-Anlage kombiniert ist.

Die deutsche Gebrauchsmusteranmeldung DE 20 2011 001 111.9 mit der Gebrauchsmusterschrift DE 20 2011 001 111 U1 offenbart ebenfalls eine Vorrichtung zur Energieerzeugung.

Als Verbrennungsmaschine bzw. Verbrennungskraftmaschine im Sinne der Erfindung wird eine Wärmekraftmaschine mit innerer Verbrennung verstanden, bei der durch exotherme chemische Reaktion sich ausdehnende, heiße Verbrennungsprodukte (Abgase) erzeugt werden. Über eine kontrollierte Expansion der durch die Verbrennung entstehenden Abgase kann mechanische Energie gewonnen und auf eine Welle übertragen werden. Erfindungsgemäß kann eine Verbrennungsmaschine auch eine Mehrzahl von zusammenwirkenden Wärmekraftmaschinen mit innerer Verbrennung und/oder eine Zusammenschaltung einer Wärmekraftmaschine und sonstiger Systeme (E-Motoren, Wärmetauscher, stationäre Brenner usw.) beinhalten. Insbesondere ist als Wärmekraftmaschine ein Hubkolbenverbrennungsmotor vorgesehen, bei dem in mehreren Arbeitszylindern Kohlenwasserstoffe derart explosiv verbrannt werden, dass in den Arbeitszylindern geführte Kolben über eine gemeinsame Kurbelwelle Rotationsenergie nach außen abgeben können. Solche Hubkolbenverbrennungsmotoren laufen je nach Bauart mit höchstem Wirkungsgrad in engen Drehzahlbereichen (+/- 250 U/min), die zwischen 500 U/min und 5000 U/min anzunehmen sind. Als Verbrennungsmaschine bzw.

Verbrennungskraftmaschine im Sinne der Erfindung wird ferner allerdings auch eine Wärmekraftmaschine in Form einer Gasturbine oder Mikrogasturbine verstanden.

Als Brennstoffe für das Betreiben einer erfindungsgemäßen Vorrichtung können z. B. Erdöl oder Erdölderivate wie z. B. Methan oder Schweröl, aber auch Erdgas, Deponiegas, Klärgas, Grubengas, Biogas oder auch Wasserstoffgas eingesetzt werden. Als Brennstoff für das Betreiben einer erfindungsgemäßen Vorrichtung kann aber insbesondere auch Wasserstoff verwendet werden.

Unter einer RC-Anlage (RC = Rankine Cycle) im Sinne der Erfindung ist eine Anlage zu verstehen, in der mit einem thermodynamischen Kreisprozess unter Verwendung eines in einem Kreislauf geführten Arbeitsmittels, z. B. Wasser bzw. Wasserdampf, Wärme in mechanische Energie gewandelt wird.

Aus dem Stand der Technik bekannt ist an sich die Möglichkeit, einem (stationären) Hubkolbenverbrennungsmotor eine RC-Anlage mit einer Turbine zuzuordnen, um einen gewissen Anteil der Abwärme des Hubkolbenverbrennungsmotors über einen RC-Prozess in mechanische Energie umzuwandeln. Die mechanische Energie steht dabei insbesondere als Rotationsenergie der genannten Turbine zur Verfügung. Aufgrund unterschiedlicher Drehzahlen von Hubkolbenverbrennungsmotoren einerseits (Drehzahl n1 < 5 000 U/min) und Dampfturbinen andererseits (Drehzahl n2 > 10 000 U/min) ist es jedoch schwierig, die mit Hubkolbenverbrennungsmotoren und Dampfturbinen erzeugten mechanischen Energien zusammenzuführen. Insbesondere bei einem Zusammenkoppeln auf einer Welle müsste ein Ausgleich der unterschiedlichen Drehzahlen über aufwändige mechanische Getriebe erfolgen. Insbesondere bei einer Einspeisung in ein einzelnes Stromnetz (insbesondere auch in ein öffentliches Stromnetz) müssten u. U. elektronische Frequenzumformer eingesetzt werden oder es müsste ein Ausgleich der unterschiedlichen Drehzahlen über mechanische Getriebe erfolgen, die zwischen den Verbrennungsmotor bzw. die Dampfturbine und einen gemeinsamen Generator geschaltet sind.

Bei variablen Frequenzen führen Frequenzumformer zu hohen Leistungsverlusten. Mechanische Getriebe mit einem starren Übersetzungsverhältnis haben den Nachteil, dass damit entweder die Verbrennungsmaschine oder die Dampfturbine nur in Drehzahlbereichen betrieben werden kann, die nicht optimal sind.

Aufgabe der Erfindung ist es, eine Vorrichtung zur Energieerzeugung bereitzustellen, in der die Energie des Brennstoffs für die Verbrennungsmaschine mit einem verbesserten Wirkungsgrad in mechanische bzw. elektrische Energie gewandelt werden kann.

Diese Aufgabe wird durch eine Vorrichtung der eingangs genannten Art gelöst, die einen mit dem elektrischen Generator (elektrisch) verbundenen Elektromotor enthält, der für das Einleiten eines Zusatzdrehmoments mit der Welle drehgekoppelt ist, und des Weiteren alle Merkmale des unabhängigen Anspruchs 1 enthält.

Die Erfindung beruht auf der Idee, dass sich die unterschiedlichen günstigen Drehzahlen einer Verbrennungsmaschine und einer Dampfturbine vorteilhaft, d. h. verlustarm und/oder verschleißfrei kombinieren lassen, indem die Dampfturbine mit der Verbrennungsmaschine über einen Elektromotor gekoppelt wird, der die Verbrennungsmaschine unterstützt. Der Elektromotor kann hierfür an die An- bzw. Abtriebswelle der Verbrennungsmaschine angeschlossen sein.

Dieser Elektromotor wird bevorzugt über ein internes Stromnetz über einen Generator gespeist, wobei in der erfindungsgemäßen Vorrichtung das interne Stromnetz bevorzugt hochfrequenten Wechselstrom führt und neben dem Elektromotor noch weitere Verbraucher in Form von Pumpen, Kompressoren oder dergleichen mit elektrischer Energie versorgen kann.

Eine Idee der Erfindung ist insbesondere, den Elektromotor als sogenannten Synchronmotor auszubilden und auch den Generator als Synchrongenerator, insbesondere als Drehstromgenerator zu gestalten. In einer erfindungsgemäßen Vorrichtung ist die Anzahl der Pole des Generators dabei kleiner als die Anzahl der Pole des Elektromotors. Es sei bemerkt, dass der Elektromotor in einer erfindungsgemäßen Vorrichtung auch als Asynchronmotor gestaltet sein kann.

Erfindungsgemäß gibt es in der RC-Anlage eine mit dem elektrischen Generator gekoppelte Dampfturbine. Um mit einer erfindungsgemäßen Vorrichtung elektrische Energie zu erzeugen (z. B. im Rahmen einer Kraft-Wärme-Kopplungsanlage bzw. eines Kleinkraftwerks), wird mit der Verbrennungsmaschine ein elektrischer Generator für die Stromerzeugung angetrieben. Die Verbrennungsmaschine kann als Verbrennungsmotor oder auch als Gasturbine ausgebildet sein. Insbesondere ist es möglich, die Verbrennungsmaschine und den elektrischen Generator mittels eines Getriebes zu koppeln. Mit der erfindungsgemäßen Vorrichtung kann über die Verbrennungsmaschine allerdings auch z. B. ein Fahrzeug oder ein Schiff angetrieben werden. Mit der erfindungsgemäßen Vorrichtung kann über die Verbrennungsmaschine allerdings auch z. B. eine Pump- oder Kompressoreinheit zum Fördern und/oder Verdichten von Fluiden angetrieben werden. In den letztgenannten Fällen wird häufig die mechanische Leistung der Verbrennungsmaschine auch als mechanische Leistung verbraucht.

Die RC-Anlage in einer erfindungsgemäßen Vorrichtung kann Wärme aus dem Kühlwasser der Verbrennungsmaschine erhalten oder mit Abwärme gespeist werden, die dem Rauchgas entzogen wird, das eine Verbrennungsmaschine erzeugt.

Die RC-Anlage in einer erfindungsgemäßen Vorrichtung kann insbesondere eine sogenannte ORC-Anlage (ORC = Organic Rankine Cycle) sein. Eine ORC-Anlage ist eine RC-Anlage, in der mit einem thermodynamischen Kreisprozess Wärme in mechanische Energie gewandelt wird, wobei in einem Arbeitsmittelkreislauf, der einem Dampfkreislauf ähnlich ist, nicht Wasserdampf als Arbeitsmittel, sondern üblicheniveise organische Medien als Arbeitsmittel eingesetzt werden, wie z. B. Butan, Toluol, Silikonöl oder auch Ammoniak, die eine in Bezug auf Wasser niedrige Verdampfungstemperatur haben. Erfindungsgemäß kann anstelle der genannten Arbeitsmittel auch Wasser oder eine Mischung aus einem wasserlöslichen Medium mit Wasser verwendet werden. In diesem Fall wäre die bevorzugte ORC-Anlage durch eine gleichwirkende RC-Anlage zu ersetzen, ohne vom Kerngedanken der Erfindung abzuweichen.

In einer ORC-Anlage wird das Arbeitsmittel mit Druck beaufschlagt. In der Regel enthält eine ORC-Anlage hierfür eine Pumpe. Das mit Druck beaufschlagte Arbeitsmittel wird dann in einem Verdampfer erwärmt. Dabei wird das Arbeitsmittel verdampft bzw. überhitzt. Das verdampfte bzw. überhitzte Arbeitsmittel wird dann zu einer Dampfturbine geführt. Hier wird es unter Erzeugung von mechanischer Energie auf einen niedrigen Druck entspannt und anschließend kondensiert. In dem Kreislauf der ORC-Anlage wird das Arbeitsmittel dann wieder mit Druck beaufschlagt und dem Verdampfer zugeführt, wo es von neuem erwärmt wird und wieder verdampft. Es sei bemerkt, dass in einer ORC-Anlage als Arbeitsmittel auch Medien eingesetzt werden können, deren Verdampfungstemperatur höher ist als diejenige von Wasser. ORC-Anlagen können für das Erzeugen von elektrischer oder mechanischer Energie aus Wärme insbesondere dann vorteilhaft eingesetzt werden, wenn das zur Verfügung stehende Temperaturgefälle zwischen einer Wärmequelle und einer Wärmesenke zu niedrig ist, um eine Wärmekraftmaschine, etwa eine Turbine, mit Wasserdampf zu betreiben.

ORC-Anlagen werden nicht nur mit Wärme aus Verbrennungseinrichtungen betrieben. Die für das Betreiben einer ORC-Anlage erforderliche Wärme kann auch geothermisch gewonnen werden oder aus Solarkraftwerken stammen. ORC-Anlagen können insbesondere auch mit der Abwärme von Verbrennungskraftmaschinen betrieben werden.

Vorteilhafte Ausführungsbeispiele der Erfindung sind in den Zeichnungen dargestellt und werden nachfolgend beschrieben.

Es zeigen:
- Fig.1: eine Vorrichtung zur Energieerzeugung mit einer Verbrennungsmaschine in Form eines Verbrennungsmotors und mit einem elektrischen Generator, der einen Elektromotor speist;
- Fig. 2: den elektrischen Generator mit dem Elektromotor in der Vorrichtung; und
- Fig. 3: eine Vorrichtung zur Energieerzeugung mit einer Gasturbine.

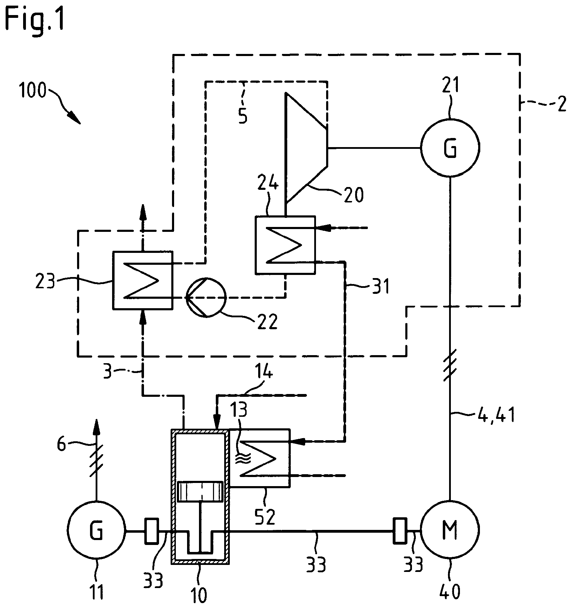

Die in der Fig. 1 gezeigte Vorrichtung zur Energieerzeugung 100 weist eine Verbrennungsmaschine 10 auf, der eine ORC-Anlage 2 zugeordnet ist. Als Verbrennungsmaschine 10 ist insbesondere ein Hubkolbenverbrennungsmotor gewählt. Die Verbrennungsmaschine 10 wird insbesondere fremdgezündet nach dem Otto-Verfahren, nach dem selbstzündenden Diesel-Verfahren betrieben. Als Brennstoffe für einen erfindungsgemäßen Hubkolbenverbrennungsmotor kommen die eingangs erwähnten flüssigen oder gasförmigen Kohlenwasserstoffe sowie gasförmiger Wasserstoff besonders in Betracht. Die Verbrennungsmaschine 10 beaufschlagt eine Welle 33 mit einem Drehmoment, wobei die Verbrennungsmaschine 10 in besonders vorteilhafter Weise mit näherungsweise konstanter Drehzahl und näherungsweise konstantem Drehmoment über längere Zeiträume (t > 1 h) hinweg in einem Bereich ihres höchsten Wirkungsgrades betrieben wird. Mit der Welle 33 wird ein Generator 11 angetrieben. Die Verbrennungsmaschine 10 wird über eine Leitung 14 mit Verbrennungsluft versorgt. Die Verbrennungsmaschine 10 erzeugt Rauchgas, das durch eine Rauchgasleitung 3 zu der ORC-Anlage 2 geführt ist. Die vorstehend beschriebene Vorrichtung 100 ist bevorzugt in stationären Kraft-Wärme-Kopplungsanlagen, Kleinkraftwerken, Pumpstationen, Verdichterstationen, Lastkraftwagen, Bahnen oder auf Schiffen zu realisieren.

Die ORC-Anlage 2 umfasst eine als Dampfturbine ausgebildete Turbine 20, die in einem Arbeitsmittelkreislauf 5 angeordnet ist. Als (fluide) Arbeitsmittel werden beispielsweise Butan, Toluol, Silikonöl oder auch Ammoniak verwendet. An die Turbine 20 ist ein Generator 21 angekoppelt. Die ORC-Anlage 2 hat einen Arbeitsmittelkondensator 24. In der OCR-Anlage 2 gibt es eine als Arbeitsmittelpumpe wirkende Speisepumpe 22. Mit der Speisepumpe 22 wird das fluide Arbeitsmittel im flüssigen Aggregatszustand auf Betriebsdruck gebracht. Das flüssige Arbeitsmittel durchströmt einen als Verdampfer wirkenden Wärmetauscher 23.

Hier wird die Wärme aus dem Rauchgas der Verbrennungsmaschine 10 auf das Arbeitsmittel übertragen. Dabei verdampft das Arbeitsmittel. Am Ausgang des Wärmetauschers 23 wird dann Sattdampf bzw. Trockendampf bzw. Trockendampf bereitgestellt. Durch den Energieeintrag in dem Wärmetauscher 21 nehmen dabei das spezifische Volumen und die Temperatur des Dampfes zu.

Der Dampf des Arbeitsmittels wird dann über die mit dem Generator 21 verbundene nahezu isentrop auf einen geringeren Druck entspannt. Hierdurch steigt das spezifische Volumen aufgrund der Expansion in der Turbine 20. Die damit verbundene Volumenvergrößerung des Arbeitsmittels, hervorgerufen durch die Druckdifferenz, bewirkt eine resultierende Arbeit in Form einer Volumenänderungsarbeit, welche die Turbine 20 an ihren Schaufeln in mechanische Energie umwandelt. Die Turbine 20 treibt den Generator 21 an. Der Generator 21 versorgt ein internes hochfrequentes Stromnetz 4 für Drehstrom der Vorrichtung 100 mit elektrischer Energie. Das interne hochfrequente Stromnetz 4 ist für eine Stromfrequenz in einem Bereich von z.B. 100 Hz bis 1000 Hz, vorzugsweise von 250 Hz bis 500 Hz ausgelegt. Das interne Stromnetz 4 in der Vorrichtung 100 enthält ein Leitungssystem 41. Das Leitungssystem 41 verbindet den Generator 21 mit dem Elektromotor 40 in der Vorrichtung 100.

Von der Turbine 20 gelangt der Dampf in den Arbeitsmittelkondensator 24. Der Arbeitsmittelkondensator 24 ist ein Wärmetauscher, durch den ein Kühlmittelkreislauf 31 geführt ist, der eine Kühlflüssigkeit enthält. Über den Kühlmittelkreislauf 31 wird die bei der Kondensation abgegebene Wärme in ein nicht weiter dargestelltes Wärmenetz gespeist. Alternativ hierzu ist es auch möglich, die Wärme des in der Kühlmittelleitung 31 geführten Kühlmittels über einen Wärmetauscher an die Umgebung abzugeben.

In dem als Kondensator wirkenden Wärmetauscher 24 kondensiert das Arbeitsmittel und geht dabei vollständig in den flüssigen Aggregatzustand über. Mit der als Arbeitsmittelpumpe wirkenden Speisepumpe 22 wird das Arbeitsmittel dann wieder auf Betriebsdruck gebracht und gelangt von neuem in den als Verdampfer wirkenden Wärmetauscher 23. Der Kreislauf für das Arbeitsmittel in der ORC-Anlage 2 ist dann geschlossen.

Der mit dem Generator 11 erzeugte elektrische Strom wird in ein externes Stromnetz 6 eingespeist. Das Stromnetz 6 kann z. B. für eine feste Spannung in der Größenordnung von 230 V, 400 V, 690 V oder auch höher ausgelegt sein. Die elektrische Leistung, für die das Stromnetz 6 ausgelegt ist, liegt bevorzugt im Megawattbereich.

Das Stromnetz 6 ist von dem internen Stromnetz 4 getrennt, das der Generator 21 versorgt. Die elektrische Frequenz in dem internen Stromnetz 4 liegt bei Betrieb der Vorrichtung 100 oberhalb der elektrischen Frequenz in dem externen Stromnetzes 6, das über den mit der Verbrennungsmaschine 10 angetriebenen Generator 11 gespeist wird. Die Speisepumpe 22 wird mit elektrischer Energie aus dem internen Stromnetz 4 angetrieben.

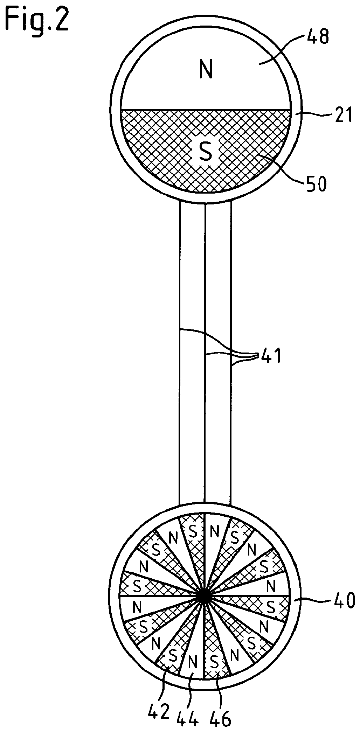

Die Fig. 2 zeigt den elektrischen Generator 21 mit dem Elektromotor 40 in der Vorrichtung 100. Der Elektromotor 40 ist mit dem von dem Generator 21 gespeisten Stromnetz 4 über mehrere Leitungsstränge 41 verbunden. Über den Elektromotor 40 wird die elektrische Leistung des von der Turbine 20 in einem Rankine-Prozess angetriebenen Generators 21 an eine mit der Verbrennungsmaschine 10 gekoppelte Welle 33 abgegeben.

Um die Drehzahl des Elektromotors 40 an die Drehzahl des Verbrennungsmotors 10 bzw. die Drehzahl des damit angetriebenen Generators 11 anzupassen, hat der Elektromotor 40 eine höhere Anzahl von Polen 42, 44, 46 als der Generator 21, der mit der Turbine 20 verbunden ist. Aufgrund der unterschiedlichen Anzahl der Pole 42, 44, 46 des Elektromotors 40 und der Pole 48, 50 des Generators 11 wirken der Elektromotor 40 und der damit zusammengeschaltete Generator 21 wie ein elektrisches Getriebe. Die Drehzahl des Generators 21 multipliziert mit dessen Polzahl geteilt durch die Polzahl des Elektromotors 40 ergibt die Drehzahl des Elektromotors 40, wenn dieser als sogenannter Synchronmotor ausgebildet ist. Wenn der Elektromotor 40 ein Asynchronmotor ist, so liegt dessen Drehzahl etwas unterhalb der vorstehend angegebenen Drehzahl. Es wird darauf hingewiesen, dass die unterschiedliche Polzahl in dem Generator 21 und dem Elektromotor 40 in der Fig. 2 lediglich sinnbildlich dargestellt ist. Eventuell zusätzlich notwendige oder zweckmäßige Komponenten, wie Stromzähler, Schalter oder Synchronisiereinheiten sind dort nicht gezeigt.

Es sei bemerkt, dass die Drehzahl der Welle der Turbine 20 und die Drehzahl des Generators 21 vorzugsweise im Bereich von 10 000 U/min bis 40 000 U/min gewählt werden können. Diese Drehzahlen liegen somit erfindungsgemäß rund eine Zehnerpotenz höher als die Drehzahl der Welle 33 der Verbrennungsmaschine 10 und des Elektromotors 40, die bevorzugt zwischen 1 500 U/min und 3 000 U/min beträgt.

Darüber hinaus sei bemerkt, dass es insbesondere in einer für hohe Temperaturen ausgelegten ORC-Anlage von Vorteil ist, hier für das Erhöhen der Effizienz zwischen der Turbine 20 und dem Arbeitsmittelkondensator 24 einen sogenannten Rekuperator anzuordnen, in dem die Temperatur des Arbeitsmittels in der ORC-Anlage 2 auf die Kondensationstemperatur abgesenkt wird.

Der Verbrennungsmotor 10 in der Vorrichtung 100 aus Fig. 1 hat einen Kühler 52, in dem Motorkühlwasser 13 Wärme an die Kühlflüssigkeit dem Kreislauf 31 abgibt. Mit dem Kreislauf 31 wird damit nicht nur die Wärme des Motorkühlwassers 13 sondern auch die die Wärme aus dem Arbeitsmittelkondensator 24 der ORC-Anlage 2 abtransportiert.

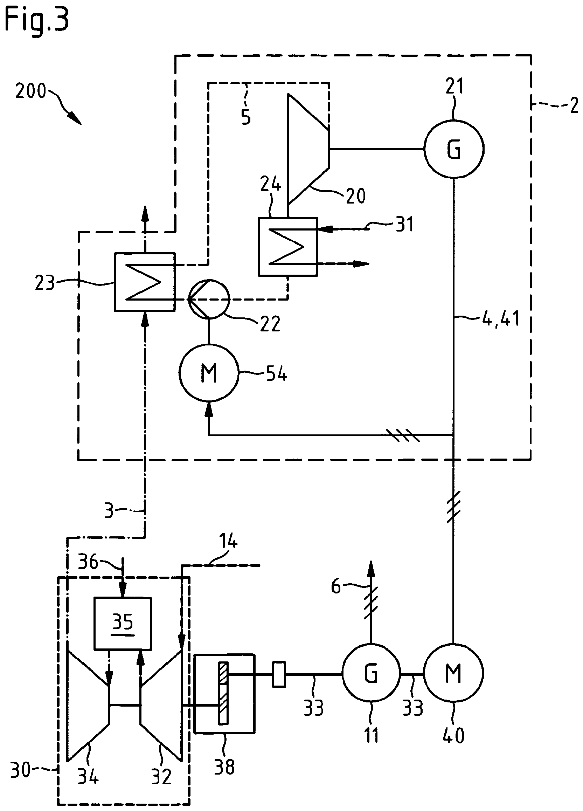

Die Fig. 3 zeigt eine Vorrichtung 200 zur Energieerzeugung mit einer Verbrennungsmaschine in Form einer Gasturbine 30. Die Gasturbine 30 hat ein Verdichterrad 32 und ein Turbinenrad 34. Das Verdichterrad 32 dient für das Verdichten von Verbrennungsluft, die über eine Leitung 14 zugeführt wird. Die Verbrennungsluft gelangt in eine Brennkammer 35, in der sie mit Brennstoff aus einer Leitung 36 vermischt zu Rauchgas verbrannt wird, mittels dessen das Turbinenrad 34 angetrieben wird. Die Gasturbine 30 ist in einem Blockheizkraftwerk angeordnet. Soweit die Vorrichtung 200 in ihrem Aufbau dem Aufbau der Vorrichtung 100 aus Fig. 1 entspricht, sind funktional gleiche Baugruppen in der Fig. 2 in Bezug auf die Fig. 1 mit identischen Bezugszeichen versehen.

Zwischen der Gasturbine 30, die auch als sogenannte Mikro-Gasturbine ausgeführt sein kann, und dem mit der Gasturbine 30 angetriebenen Generator 11 ist hier ein Getriebe 38 angeordnet. Das Getriebe 38 dient dazu, die Drehzahl der Gasturbine 30 an die Drehzahl der Welle 33 mit dem Generator 11 und dem Elektromotor 40 anzupassen. Es sei bemerkt, dass bei einer entsprechenden Drehzahlauslegung von Generator 11 und Elektromotor 40 auf das Getriebe gegebenenfalls verzichtet werden kann. Außerdem sei bemerkt, dass es möglich ist, ein solches Getriebe auch nur für das Ankoppeln des Generators 11 oder des Elektromotors 40 vorzusehen.

Die Speisepumpe 22 in der der RC- bzw. ORC-Anlage 2 hat einen Elektromotor 54, der über das interne Stromnetz 4 mit elektrischer Energie versorgt wird. Für die Speisepumpe 22 kann so ein Betrieb bei höheren Drehzahlen ermöglicht bzw. vereinfacht werden. Um die Drehzahl der Speisepumpe 22 an das interne Stromnetz anzupassen, ist die Anzahl der Pole des Elektromotors 54 der Speisepumpe 22 auf die Anzahl der Pole in dem Generator 21 abgestimmt. Auch hier kann durch Zusammenschalten des Elektromotors 54 mit dem Generator 21 in dem Stromnetz 4 eine Getriebewirkung erzielt werden.

Die vorstehend beschriebenen in der Fig. 1 und Fig. 3 gezeigten Vorrichtungen 100, 200 zur Energieerzeugung sind insbesondere von Vorteil, wenn in diesen das interne Stromnetz 4 und das externe Stromnetz 6 mit großen Frequenzunterschieden betrieben werden soll. Wenn es dagegen gewünscht ist, die Verbrennungsmaschine 10 und die Turbine 20 bei einer annähernd gleichen Drehzahl zu betreiben, so kann auch auf ein entsprechend getrenntes internes Stromnetz 4 in einer Vorrichtung 100, 200 verzichtet werden. In diesem Fall kann die Verbrennungsmaschine 10 mit der Turbine 20 an eine gemeinsame Welle 33 angeschlossen werden.

Es sei bemerkt, dass mit einer Vorrichtung 100, 200 auch eine Maschine, ein Fahrzeug oder ein Schiff direkt oder über ein Getriebe angetrieben werden kann. Eine Vorrichtung 100, 200 eignet sich insbesondere für den Betrieb in einer Station für das Verdichten von Gasen, bei der die Verbrennungskraftmaschine insbesondere direkt oder über ein Getriebe mit einer Kompressoreinheit zum Verdichten von Gas gekoppelt ist. Falls es sich bei dem zu verdichtenden Gas um ein brennbares Gas in Form von Wasserstoff, Methan bzw. Erdgas oder dergleichen handelt, ist insbesondere vorgesehen, die Verbrennungskraftmaschine als Gasmotor oder als Gasturbine auszuführen und das brennbare Gas als Brennstoff für die Verbrennungskraftmaschine zu nutzen. Ferner ist es in diesem Fall vorsehbar, die über den RC-/ORC-Prozess gewonnene mechanische Energie über die erfindungsgemäße elektrische Kopplung (unter Vernachlässigung von Umwandlungsverlusten) vollständig wieder der Verbrennungskraftmaschine als mechanische Energie zur Verfügung zu stellen.

Mit der in dem internen Stromnetz 4 einer Vorrichtung 100, 200 bereitgestellten elektrischen Energie können z. B. Antriebe in industriellen Fertigungsanlagen, insbesondere Antriebe in Lackierereien oder in fördertechnischen Anlagen gespeist werden. Mit einem solchen internen Stromnetz können auch Antriebe für Ventilatoren zur Belüftung von Vorbehandlungs- und KTL-Tunneln oder Spritzkabinen mit elektrischer Energie versorgt werden. Das interne Stromnetz in einer Vorrichtung 100, 200 eignet sich grundsätzlich auch für das Betreiben von elektrischen Verbrauchern in Reinräumen, Trocknern, Zwischentrocknern, Kühlzonen, Schleusen und Abluftreinigungsanlagen.

Zusammenfassend sind insbesondere folgende bevorzugte Merkmale festzuhalten: Die Erfindung betrifft eine Vorrichtung 100, 200 zur Energieerzeugung. Die Vorrichtung zur Energieerzeugung 100, 200 enthält eine Verbrennungsmaschine 10, die eine Welle 33 mit einem Drehmoment beaufschlagt. Die Verbrennungsmaschine 10 erzeugt Abwärme. In der Vorrichtung 100, 200 gibt es eine RC-Anlage 2, der aus der Verbrennungsmaschine 10 Abwärme zugeführt wird, um damit eine mit einem elektrischen Generator 21 gekoppelte Dampfturbine 20 zu betreiben. Die Vorrichtung 100, 200 hat einen von dem elektrischen Generator 21 gespeisten Elektromotor 40, der für das Einleiten eines Zusatzdrehmoments mit der Welle 33 drehgekoppelt ist.

### Bezugszeichenliste:

- 2: ORC-Anlage
- 3: Rauchgasleitung
- 4: internes Stromnetz
- 5: Arbeitsmittelkreislauf
- 6: externes Stromnetz
- 10, 30: Verbrennungsmaschine
- 11: Generator
- 13: Motorkühlwasser
- 14: Leitung
- 20: Turbine
- 21: Generator
- 22: Speisepumpe
- 23: Wärmetauscher
- 24: Arbeitsmittelkondensator
- 30: Gasturbine
- 31: Kühlmittelkreislauf
- 32: Verdichterrad
- 33: Welle
- 34: Turbinenrad
- 35: Brennkammer
- 36: Leitung
- 38: Getriebe
- 40: Elektromotor
- 42, 44, 46; 48, 50: Pole
- 52: Kühler
- 54: Elektromotor
- 100,200: Vorrichtung

## Patentansprüche

1. Vorrichtung (100, 200) zur Energieerzeugung
mit einer Verbrennungsmaschine (10, 30), die eine Welle (33) mit einem Drehmoment beaufschlagt, wobei die Verbrennungsmaschine (10, 30) Abwärme erzeugt, und
mit einer RC-Anlage (2), der Abwärme aus der Verbrennungsmaschine (10, 30) zugeführt wird, um damit eine mit einem elektrischen Generator (21) gekoppelte Turbine (20) gemäß dem Rankine-Prozess (RC) zu betreiben, der mit einem für das Einleiten eines Zusatzdrehmoments mit der Welle (33) drehgekoppelten Elektromotor (40) über ein internes Stromnetz verbunden ist, wobei die Verbrennungsmaschine (10) mittels der Welle (33) einen weiteren elektrischen Generator (11) antreibt, der für das Einspeisen von elektrischem Strom in ein für das Bereitstellen von elektrischen Leistungen im Megawattbereich ausgelegtes Starkstromnetz bestimmt ist.

2. Vorrichtung nach Anspruch 1, **dadurch gekennzeichnet, dass** die Anzahl der Pole des mit der Turbine (20) gekoppelten Generators (21) kleiner ist als die Anzahl der Pole des Elektromotors (40).

3. Vorrichtung nach einem der Ansprüche 1 oder 2, **dadurch gekennzeichnet, dass** der Elektromotor (40) ein Synchronmotor oder Asynchronmotor ist und der mit der Turbine (20) gekoppelte Generator (21) als Synchrongenerator ausgebildet ist.

4. Vorrichtung nach einem der Ansprüche 1 bis 3, **dadurch gekennzeichnet, dass** der Elektromotor (40) mit dem mit der Turbine (20) gekoppelten Generator (21) über mehrere Leitungsstränge (41) verbunden ist.

5. Vorrichtung nach einem der Ansprüche 1 bis 4, **dadurch gekennzeichnet, dass** die Verbrennungsmaschine als Verbrennungsmotor (10) ausgebildet ist.

6. Vorrichtung nach einem der Ansprüche 1 bis 5, **dadurch gekennzeichnet, dass** die Verbrennungsmaschine als Gasturbine (30) ausgebildet ist.

7. Vorrichtung nach Anspruch 6, **dadurch gekennzeichnet, dass** die Verbrennungsmaschine (10, 30) und der mit der Verbrennungsmaschine (10, 39) angetriebene weitere elektrische Generator (11) mittels eines Getriebes (38) gekoppelt sind, das die Drehzahl der Verbrennungsmaschine (10, 20) an die Drehzahl des Elektromotors (40) anpasst.

8. Vorrichtung nach einem der Ansprüche 1 bis 7, **dadurch gekennzeichnet, dass** die Verbrennungsmaschine ein Fahrzeug oder ein Schiff antreibt.

9. Vorrichtung nach einem der Ansprüche 1 bis 8, **dadurch gekennzeichnet, dass** die RC-Anlage eine ORC-Anlage (2) ist.

10. Vorrichtung nach einem der Ansprüche 1 bis 9, **dadurch gekennzeichnet, dass** die Verbrennungsmaschine (10) mit Kühlwasser (13) gekühlt ist und die RC-Anlage (2) Abwärme der Verbrennungsmaschine (10) aus dem Kühlwasser (13) erhält.

11. Vorrichtung nach einem der Ansprüche 1 bis 10, **dadurch gekennzeichnet, dass** die Verbrennungsmaschine (10) Rauchgas erzeugt und die RC-Anlage (2) Abwärme der Verbrennungsmaschine (10) aus dem Rauchgas erhält.

12. Verfahren um Erzeugen von elektrischer Energie mit einer gemäß einem der Ansprüche 1 bis 11 ausgebildeten Vorrichtung, **dadurch gekennzeichnet, dass** der mit der Verbrennungsmaschine (10) angetriebene weitere elektrische Generator (11) mit einer Drehzahl betrieben wird, die zwischen 10 000 U/min und 40 000 U/min liegt.

13. Verfahren nach Anspruch 12, **dadurch gekennzeichnet, dass** die Drehzahl der von der Verbrennungsmaschine (10, 30) mit einem Drehmoment beaufschlagten Welle zwischen 1 500 U/min und 3 000 U/min liegt.

## Claims

1. Device (100, 200) for generating energy
having an internal combustion engine (10, 30) which loads a shaft (33) with a torque, the internal combustion engine (10, 30) generating waste heat, and
having an RC plant (2) which is fed waste heat from the internal combustion engine (10, 30), in order to operate therewith a turbine (20) which is coupled to an electric generator (21) according to the Rankine process (RC),
which generator (21) is connected via an internal power network to an electric motor (40) which is rotationally coupled to the shaft (33) in order to introduce an additional torque, the internal combustion engine (10) driving a further electric generator (11) by means of the shaft (33), which generator (11) is intended to feed electric power into a high-voltage power system which is designed to provide electric outputs in the megawatt range.

2. Device according to Claim 1, **characterized in that** the number of poles of the generator (21) coupled to the turbine (20) is smaller than the number of poles of the electric motor (40).

3. Device according to either of Claims 1 and 2, **characterized in that** the electric motor (40) is a synchronous motor or asynchronous motor and the generator (21) coupled to the turbine (20) is configured as a synchronous generator.

4. Device according to one of Claims 1 to 3, **characterized in that** the electric motor (40) is connected to the generator (21) coupled to the turbine (20) via a plurality of cable strands (41).

5. Device according to one of Claims 1 to 4, **characterized in that** the internal combustion engine is configured as a combustion engine (10).

6. Device according to one of Claims 1 to 5, **characterized in that** the internal combustion engine is configured as a gas turbine (30).

7. Device according to Claim 6, **characterized in that** the internal combustion engine (10, 30) and the further electric generator (11) driven with the internal combustion engine (10, 39) are coupled by means of a gear mechanism (38) which matches the speed of the internal combustion engine (10, 20) to the speed of the electric motor (40).

8. Device according to one of Claims 1 to 7, **characterized in that** the internal combustion engine drives a vehicle or a ship.

9. Device according to one of Claims 1 to 8, **characterized in that** the RC plant is an ORC plant (2).

10. Device according to one of Claims 1 to 9, **characterized in that** the internal combustion engine (10) is cooled with cooling water (13) and the RC plant (2) receives waste heat of the internal combustion engine (10) from the cooling water (13).

11. Device according to one of Claims 1 to 10, **characterized in that** the internal combustion engine (10) produces exhaust gas and the RC plant (2) receives waste heat of the internal combustion engine (10) from the exhaust gas.

12. Method for generating electric power by way of a device which is configured according to one of Claims 1 to 11, **characterized in that** the further electric generator (11) which is driven by way of the internal combustion engine (10) is operated at a rotational speed which lies between 10 000 rpm and 40 000 rpm.

13. Method according to Claim 12, **characterized in that** the rotational speed of the shaft which is loaded with a torque by the internal combustion engine (10, 30) lies between 1500 rpm and 3000 rpm.

## Revendications

1. Ensemble (100, 200) de production d'énergie, présentant
une machine (10, 30) à combustion interne qui applique un couple de rotation sur un arbre (33), la machine (10, 30) à combustion interne produisant de la chaleur et
une installation RC (2) à laquelle la chaleur provenant de la machine (10, 30) à combustion interne est apportée pour ainsi alimenter une turbine (20) utilisant le principe de Rankine (RC) et raccordée à un générateur électrique (21),
le moteur électrique (40) accouplé en rotation à l'arbre (33) pour y appliquer un couple de rotation supplémentaire étant raccordé par l'intermédiaire d'un réseau interne de courant,
la machine (10) à combustion interne entraînant au moyen de l'arbre (33) un autre générateur électrique (11) qui est conçu pour injecter du courant électrique dans un réseau de courant fort conçu pour délivrer l'énergie électrique dans la plage de puissance des mégawatts.

2. Ensemble selon la revendication 1, **caractérisé en ce que** le nombre des pôles du générateur (21) raccordé à la turbine (20) est inférieur au nombre des pôles du moteur électrique (40).

3. Ensemble selon l'une des revendications 1 ou 2, **caractérisé en ce que** le moteur électrique (40) est un moteur synchrone ou un moteur asynchrone et **en ce que** le générateur (21) accouplé à la turbine (20) est configuré comme générateur synchrone.

4. Ensemble selon l'une des revendications 1 à 3, **caractérisé en ce que** le moteur électrique (40) est relié par l'intermédiaire de plusieurs barres de puissance (41) au générateur (21) accouplé à la turbine (20).

5. Ensemble selon l'une des revendications 1 à 4, **caractérisé en ce que** la machine à combustion interne est configurée comme moteur (10) à combustion interne.

6. Ensemble selon l'une des revendications 1 à 5, **caractérisé en ce que** la machine à combustion interne est configurée comme turbine à gaz (30).

7. Ensemble selon la revendication 6, **caractérisé en ce que** la machine (10, 30) à combustion interne et l'autre générateur électrique (11) entraîné par la machine (10, 39) à combustion interne sont accouplés au moyen d'une transmission (38) qui adapte la vitesse de rotation de la machine (10, 20) à combustion interne à la vitesse de rotation du moteur électrique (40).

8. Ensemble selon l'une des revendications 1 à 7, **caractérisé en ce que** la machine à combustion interne entraîne un véhicule ou un navire.

9. Ensemble selon l'une des revendications 1 à 8, **caractérisé en ce que** l'installation RC est une installation ORC (2).

10. Ensemble selon l'une des revendications 1 à 9, **caractérisé en ce que** la machine (10) à combustion interne est refroidie à l'aide d'eau de refroidissement (13) et **en ce que** l'installation RC (2) reçoit de l'eau de refroidissement (13) la chaleur dégagée par la machine (10) à combustion interne.

11. Ensemble selon l'une des revendications 1 à 10, **caractérisé en ce que** la machine (10) à combustion interne produit des gaz de fumée et **en ce que** l'installation RC (2) reçoit des gaz de fumée la chaleur dégagée par la machine (10) à combustion interne.

12. Procédé de production d'énergie électrique à l'aide d'un ensemble configuré selon l'une des revendications 1 à 11, **caractérisé en ce que** l'autre générateur électrique (11) entraîné par la machine (10) à combustion interne est utilisé à une vitesse de rotation comprise entre 10 000 tours/min et 40 000 tours/min.

13. Procédé selon la revendication 12, **caractérisé en ce que** la vitesse de rotation de l'arbre sur lequel la machine (10, 30) à combustion interne applique un couple de rotation est comprise entre 1 500 tours/min et 3 000 tours/min.
